# EUROPEAN PATENT APPLICATION

(11) **EP 1 020 121 A1**
(43) Date of publication of application: **19.07.2000**
(21) Application number: 98204455.4
(22) Date of filing: 28.12.1998
(51) Int. Cl.: A23F 5/40, A23F 5/38

(54) **Coffee beverage powder**

(71) Applicant: SOCIETE DES PRODUITS NESTLE S.A., 1800 Vevey (CH)
(72) Inventor: Chmiel, Oliver, 1350 Orbe (CH); Vareille, Cecile, 1805 Jongny (CH)

(57) **Abstract**

A coffee beverage powder which is soluble in cold milk. The beverage powder is in the form of granules each having a core formed by sugar crystal. The sugar crystal is coated with lecithin and soluble coffee particles are adhered to the lecithin. The coffee beverage powder dissolves in cold milk within a few seconds.

## Description

### Field of the Invention

This invention relates to a coffee beverage powder which is soluble in cold milk.

### Background of the Invention

Soluble coffee powder is almost instantaneously soluble in hot water and is very soluble in cold water. However, in cold milk, soluble coffee powder is at best sparingly soluble. Ordinarily, this is not a problem. However, for the preparation of frappé coffee beverages using milk or simply iced coffee beverages containing milk, the lack of solubility of the coffee powder in the cold milk is a problem.

A solution to the problem has been to provide a beverage powder which is produced by spray-drying a mixture of coffee, whitener and sweetener. Since a whitener is included in the beverage powder, the beverage powder need only be dissolved in cold water. A commercial example of such a powder is the NESCAFE® Frappé product sold by Nestlé. Further, this product has reasonably good solubility in cold milk when the mixture is shaken. However when the mixture is stirred, this product is not sufficiently soluble for most consumers.

However, many consumers may prefer to prepare iced coffee beverages using cold milk, and without the need to shake the beverage.

### Summary of the invention

Accordingly, in one aspect, this invention provides a coffee beverage powder which is soluble in cold milk, the beverage powder comprising granules each having a core comprising a sugar crystal, a coating of lecithin about the core, and soluble coffee particles adhered to the lecithin.

The beverage powder is readily dissolvable in cold milk and therefore may be used to prepare cold coffee beverages by adding the powder to cold milk and stirring it. Further, the beverage powder has a substantially homogeneous colour. It also has a low susceptibility to separation of its components.

Preferably, the sugar crystals have a particles size in the range of about 150 µm to about 500 µm. The soluble coffee particles preferably have a particle size of less than about 200 µm.

In a further aspect, this invention provides a process for producing a coffee beverage powder which is soluble in cold milk, the process comprising:-
coating sugar particles with warmed lecithin under agitation;
adding soluble coffee particles to the coated sugar particles under agitation to cause the soluble coffee particles to adhere to the coated sugar particles; and
collecting the coffee beverage powder.

Preferably, the lecithin is warmed to a temperature of about 40°C to about 60°C. Further, the sugar crystals may be warmed to a temperature of about 30°C to about 40°C prior to being coated with lecithin.

The invention also provides a coffee beverage powder obtainable from the process defined above.

### Detailed Description of the Preferred Embodiments

Embodiments of the invention are now described, by way of example. The invention is based upon the discovery that the solubility of soluble coffee powder in cold milk may be improved by coating the soluble coffee powder to sugar crystals using lecithin.

The invention therefore provides a beverage powder which is made up of granules of sugar, soluble coffee powder, and lecithin. Each granule has a core containing one or more sugar crystals. The core has a coating of lecithin about it. Soluble coffee particles are adhered to the lecithin.

The beverage powder has a substantially homogeneous colour and appearance. Because the soluble coffee particles do not necessarily completely coat the core, some of the core may be visible. Therefore some white specks may be visible in the beverage powder. Hence the colour of the powder is not completely homogeneous but the powder has a generally brown, homogeneous appearance.

Further, because the soluble coffee particles are adhered to the core, the beverage powder has low susceptibility to separation. Ordinarily, powders which contain separate sugar and coffee components are highly susceptible to separation.

The soluble coffee powder may be any suitable spray- or freeze-dried coffee powder. Such coffee powders are commercially available or may be produced by conventional extraction and drying techniques. Spray-dried powder is preferred; especially non-agglomerated powder. If desired, the soluble coffee powder may contain coffee substitutes such as chicory.

Since the coffee powder is preferably non-agglomerated, it has a particle size of less than about 500 µm. Preferably, the coffee powder has a particle size of less than about 200 µm; for example less than about 100 µm.

The soluble coffee powder makes up at least about 10% by weight of the beverage; for example about 10% by weight to about 35% by weight of the beverage powder. For example, the soluble coffee powder makes up about 15% to about 20% by weight of the beverage powder.

The sugar crystals may be any suitable sugar crystals obtainable from any suitable source. However, the sugar crystals preferably have a particle size in the range of about 150 µm to about 500 µm. A particularly suitable sugar is Seminola 0 grade sugar. This sugar is commercially available.

The lecithin may be lecithin which is suitable for food usage and obtained from any suitable commercial source.

The beverage powder preferably has a particle size less than about 2 mm; more preferably less than about 1.5 mm. For example, the beverage powder may have a particle size of about 500 µm to about 1.5 mm.

The beverage powder preferably has a density of about 700 g/l to about 900 g/l; for example about 750 g/l to about 850 g/l.

The beverage powder is preferably able to dissolve in cold milk at about 10°C with stirring within in about 30 seconds. More preferably, the beverage powder is able to dissolve in cold milk with stirring within in about 20 seconds.

The beverage powder is produced by first coating sugar crystals with the lecithin. To obtain uniform coating of the sugar crystals, the lecithin is preferably heated to reduce its viscosity. However the lecithin should not be heated to a temperature at which off flavours begin to develop. The exact temperature selected will depend upon factors such as the particular lecithin used and may be readily selected by a person skilled in the art. Usually, heating the lecithin to a temperature in the range of about 40°C to about 60°C should be adequate.

The coating of the sugar crystals may be carried out in any suitable equipment in which the liquid lecithin may be uniformly coated on the sugar crystals. Equipment in which agitation of the sugar crystals takes place is necessary. For example, the coating may be carried out in a batch or continuous mixer or coater. Alternatively, a fluidised bed may be used.

Once the sugar crystals have been coated, the soluble coffee powder is added under agitation. If the process is a batch process, the same piece of equipment may be used. For example, the soluble coffee powder may be added to the coated sugar crystals in the mixer or coater. If the process is a continuous process, the soluble coffee powder is preferably added to the coated sugar crystals in a separate unit operation. Mixers, coaters or fluidised beds may be used.

The beverage powder so produced is sieved to remove particles of size greater than about 1.5 mm. The beverage powder is then collected and packed in the usual manner.

If desired, the beverage powder may include other sweeteners such as glucose, corn syrup solids, dextrose, fructose, maltodextrin, and the like. Artificial sweeteners such as saccharin, cyclamates, acetosulfame, and L-aspartyl based sweeteners such as aspartame, may also be used. If used, the additional sweeteners are preferably combined with the sugar crystals prior to coating.

Suitable flavouring agents, colouring agents, flowing agents, antioxidants, and the like may also be included as desired. These substances are preferably combined with the sugar crystals prior to coating.

Specific examples of the invention are now described to further illustrate the invention.

### Example 1

An amount of 23.5 kg of Seminola 0 grade sugar is warmed to 35 °C while mixing in an HM 50 Schneider Mixer. Then 450 g of soy lecithin at 50°C is added and the mixture mixed for 15 minutes. The temperature is kept at about 37 °C.

About 6 kg of spray-dried coffee powder and about 45 g of vanilla flavour is added and the mixture mixed for another 15 minutes. The resulting powder is then sieved through a 1.5 mm sieve.

The beverage powder obtained has a substantially homogeneous appearance. The colour is brown with specks of white being visible. The powder has a density of about 800 g/l. The powder contains about 20% by weight of coffee powder.

About 9 g of the beverage powder is added to 150 ml of cold milk. The beverage is stirred about 5 to 6 times. Substantially all of the beverage powder is dissolved.

### Example 2

An amount of 9 g of the beverage powder of example 1 is combined with about 0.15 g of cardamom. The mixture is added to 150 ml of milk at a temperature of about 10°C. The milk is stirred for 5 or 6 times; less than about 10 seconds. The beverage powder is substantially dissolved.

### Example 3

An amount of 9 g of the beverage powder of example 1 is combined with about 1.5 g sugar and about 75 mg of caramel. The mixture is added to 150 ml of milk at a temperature of about 10°C. The milk is stirred for 5 or 6 times; less than about 10 seconds. The beverage powder is substantially dissolved.

### Example 4

The process of example 1 is repeated except that the beverage powder contains about 35% coffee powder. The beverage powder obtained has a substantially homogeneous appearance and is a little more brown that the powder of example 1. However, some specks of white are visible. The powder has a density of about 800 g/l.

About 9 g of the beverage powder is added to 150 ml of cold milk. The beverage is stirred about 5 to 6 times. Substantially all of the beverage powder is dissolved.

## Claims

1. A coffee beverage powder which is soluble in cold milk, the beverage powder comprising granules each having a core comprising a sugar crystal, a coating of lecithin about the core, and soluble coffee particles adhered to the lecithin.

2. A coffee beverage powder which dissolves in cold milk within 30 seconds under stirring, the beverage powder comprising granules each having a core comprising a sugar crystal, a coating of lecithin about the core, and soluble coffee particles adhered to the lecithin.

3. A coffee beverage powder according to claim 1 or claim 2 in which the sugar crystals have a particles size in the range of about 150 µm to about 500 µm.

4. A coffee beverage powder according to any of claims 1 to 3 in which the soluble coffee particles are non-agglomerated.

5. A coffee beverage powder according to claim 4 in which the soluble coffee powder has a particle size of less than about 200 µm.

6. A coffee beverage powder according to any of claims 1 to 5 which contains 10% to 35% by weight of soluble coffee powder.

7. A process for producing a coffee beverage powder which is soluble in cold milk, the process comprising:-
coating sugar crystals with warmed lecithin under agitation;
adding soluble coffee particles to the coated sugar particles under agitation to cause the soluble coffee particles to adhere to the coated sugar particles; and
collecting the coffee beverage powder.

8. A process according to claim 7 in which the lecithin is warmed to a temperature of about 40°C to about 60°C.

9. A process according to claim 7 or claim 8 in which the sugar crystals are warmed to a temperature of 30°C to 40°C prior to being coated with lecithin.

10. A process according to any of claims 7 to 9 further comprising sieving the coffee beverage powder to remove particles of size greater than 1.5 mm.
